# EUROPEAN PATENT APPLICATION

(11) **EP 3 667 641 A1**
(43) Date of publication of application: **17.06.2020**
(21) Application number: 18877551.4
(22) Date of filing: 19.07.2018
(51) Int. Cl.: G08G 1/16, B60R 21/00, G01C 21/26

(54) **VEHICLE DRIVING ASSISTANCE SYSTEM, VEHICLE DRIVING ASSISTANCE METHOD, AND VEHICLE DRIVING ASSISTANCE PROGRAM**

(30) Priority: 17.11.2017 JP 2017222159
(71) Applicant: AISIN AW CO., LTD., Anjo-shi, Aichi-ken, 444-1192 (JP)
(72) Inventor: SAKAI, Takamitsu, Anjo-shi Aichi 444-1192 (JP)
(74) Representative: Kramer Barske Schmidtchen Patentanwälte PartG mbB
(86) International application number: PCT/JP2018/027129
(87) International publication number: WO 2019/097764

(57) **Abstract**

A driver is appropriately informed about information on a route, a speed, etc., recommended for traveling while avoiding obstacles present around a vehicle. A vehicle driving assistance system (10) includes a display part (5) that displays a recommended driving marking (M) superimposed on a real view (S). The recommended driving marking (M) includes: a recommended route marking (MK) representing a recommended route (K) which is a traveling route with a relatively low likelihood of interference with one or a plurality of obstacles (B) present in a traveling direction of a vehicle (100); and a recommended speed marking (MV) representing a recommended speed index which is an index related to a travel speed recommended when the vehicle (100) travels the recommended route (K). The recommended route marking (MK) and the recommended speed marking (MV) are displayed so as to be associated with each other.

## Description

### TECHNICAL FIELD

The present invention relates to a vehicle driving assistance technique for assisting in driving of a vehicle by a driver.

### BACKGROUND ART

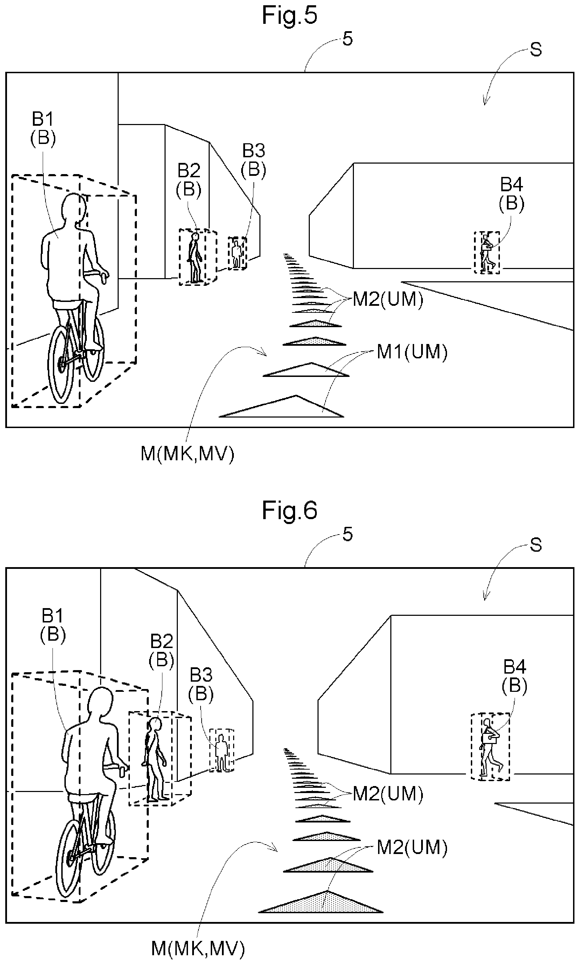

JP 2017-33542 A discloses an information display device that displays a travel route for allowing a vehicle to travel while avoiding obstacles present around the vehicle, such that the travel route is superimposed on a view seen from a driver's seat through a windshield (claim 1, FIGS. 5 to 8, etc.). A driver can appropriately check the travel route that the vehicle can travel while avoiding contact with the obstacles.

Note, however, that in an actual driving environment, upon traveling while avoiding contact with obstacles, not only steering using a steering wheel, but also vehicle speed control using a brake and an accelerator is often performed. Hence, it may not make the driver feel right when a travel route for steering is just displayed. JP 2017-33542 A exemplifies that a vehicle performs deceleration control by receiving a brake signal of a vehicle in front of the vehicle by vehicle-to-vehicle communication. However, obstacles are not always vehicles having a vehicle-to-vehicle communication function, and are often people, bicycles, and other objects. Therefore, there is still room for improvement in terms of informing the driver about an appropriate travel speed and travel route so that various obstacles present around the vehicle can be avoided.

### CITATIONS LIST

### PATENT LITERATURE

Patent Literature 1: JP 2017-33542 A

### SUMMARY OF INVENTION

### TECHNICAL PROBLEMS

In view of the above-described background, it is desired to appropriately inform a driver about information on a route, a speed, etc., recommended for traveling while avoiding obstacles present around a vehicle.

### SOLUTIONS TO PROBLEMS

A characteristic configuration of a vehicle driving assistance system in view of the above description is that
the vehicle driving assistance system includes a display part that displays a recommended driving marking superimposed on a real view,
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the recommended route marking and the recommended speed marking are displayed so as to be associated with each other.

Technical features of such a vehicle driving assistance system are also applicable to a vehicle driving assistance method and a vehicle driving assistance program. For example, the vehicle driving assistance method can have various steps having features of the above-described vehicle driving assistance system. In addition, the vehicle driving assistance program can cause a computer to implement various functions having the features of the above-described vehicle driving assistance system. As a matter of course, these vehicle driving assistance method and vehicle driving assistance program can also provide the functions and effects of the above-described vehicle driving assistance system.

A characteristic configuration of a vehicle driving assistance method in that case is that
the vehicle driving assistance method displays, on a display part, a recommended driving marking superimposed on a real view,
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the vehicle driving assistance method includes a step of displaying the recommended route marking and the recommended speed marking such that the recommended route marking and the recommended speed marking are associated with each other.

In addition, a characteristic configuration of a vehicle driving assistance program is that
the vehicle driving assistance program displays, on a display part, a recommended driving marking superimposed on a real view,
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the vehicle driving assistance program causes a computer to implement a function of displaying the recommended route marking and the recommended speed marking such that the recommended route marking and the recommended speed marking are associated with each other.

According to these characteristic configurations, by displaying a recommended driving marking in which a recommended route marking is associated with a recommended speed marking, the driver can be appropriately informed in an easy-to-understand manner about information on what travel speed is appropriate for traveling a recommended route. As such, according to this configuration, the driver can be appropriately informed about information on a route, a speed, etc., recommended for traveling while avoiding obstacles present around the vehicle.

Further features and advantages of the vehicle driving assistance system, the vehicle driving assistance method, and the vehicle driving assistance program will become apparent from the following description of an embodiment which is described with reference to drawings.

### BRIEF DESCRIPTION OF DRAWINGS

FIG. 1 is a perspective view showing an example of an area near a driver's seat of a vehicle.
FIG. 2 is a block diagram schematically showing an example of a system configuration of a vehicle driving assistance system.
FIG. 3 is a plan view showing a concept of driving assistance.
FIG. 4 is a flowchart showing an example of a procedure of driving assistance.
FIG. 5 is a diagram showing an example of a recommended driving marking superimposed on a real view.
FIG. 6 is a diagram showing an example of a recommended driving marking superimposed on a real view.
FIG. 7 is a diagram showing an example of a recommended driving marking superimposed on a real view.
FIG. 8 is a diagram showing an example of a recommended driving marking representing a recommended speed by a color.
FIG. 9 is a diagram showing an example of a recommended driving marking representing recommended speeds by colors.
FIG. 10 is a diagram showing an example of a recommended driving marking representing a recommended speed by intervals between unit markings.
FIG. 11 is a diagram showing an example of a recommended driving marking representing a recommended speed by intervals between unit markings.
FIG. 12 is a diagram showing an example of a recommended driving marking representing a recommended speed by the movement of unit markings.
FIG. 13 is a diagram showing an example of a recommended driving marking representing a recommended speed by the movement of unit markings.
FIG. 14 is a diagram showing an example of a recommended driving marking representing a recommended speed by the shape of unit markings.
FIG. 15 is a diagram showing an example of a recommended driving marking representing recommended speeds by the shapes of unit markings.
FIG. 16 is a plan view showing a relationship between an influence marking and a recommended driving marking.
FIG. 17 is a diagram showing an example of a recommended driving marking and an influence marking which are superimposed on a real view.
FIG. 18 is a diagram showing an example in which a recommended route marking and a recommended speed marking are independent of each other.

### DESCRIPTION OF EMBODIMENTS

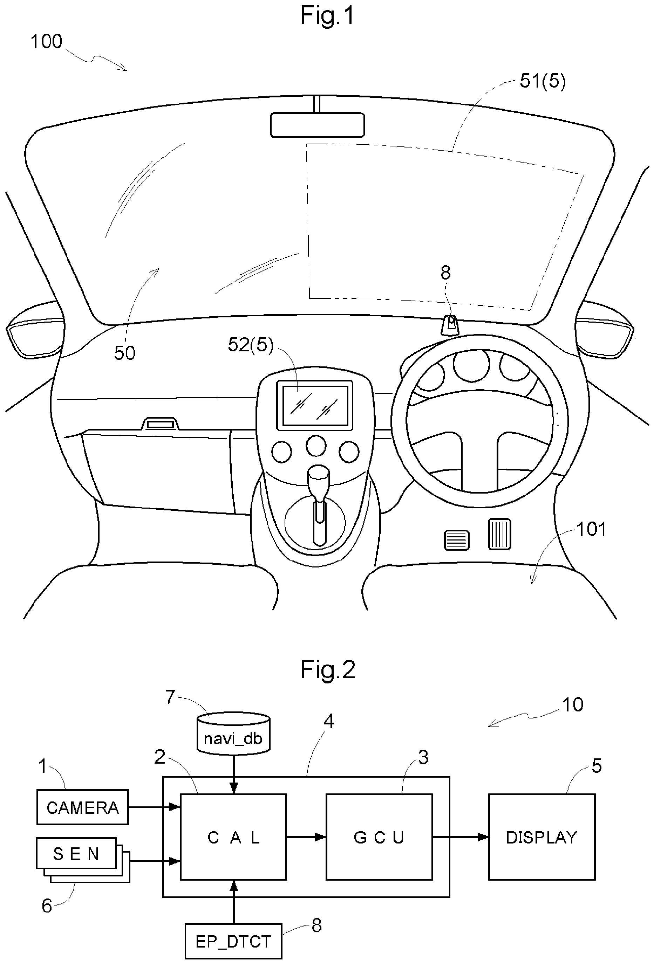

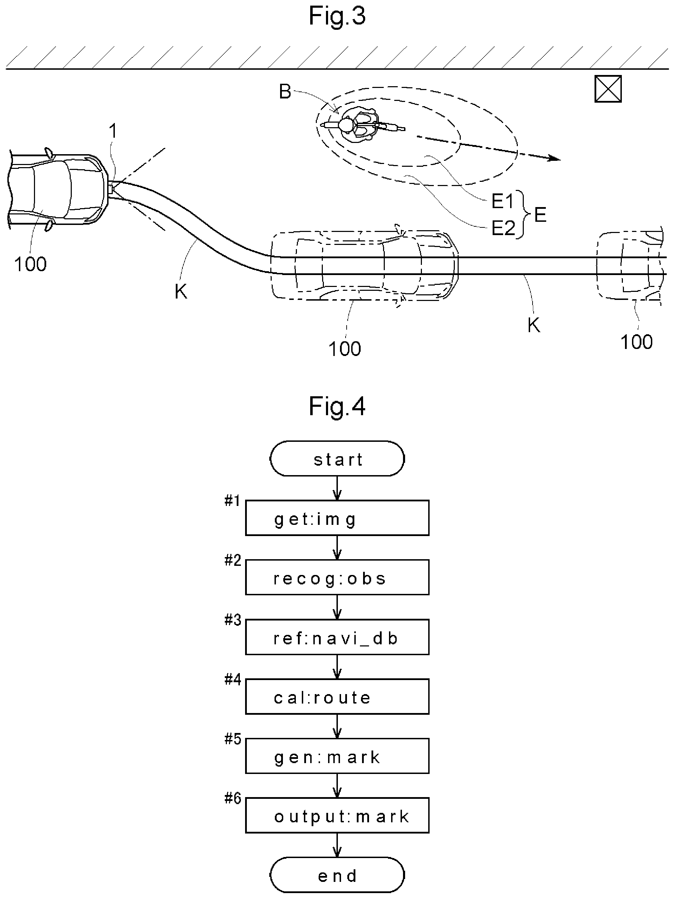

An embodiment of a vehicle driving assistance system (including a vehicle driving assistance method and a vehicle driving assistance program) will be described below based on the drawings. FIG. 1 shows an example of an area near a driver's seat 101 of a vehicle 100 having a vehicle driving assistance system mounted thereon, and a block diagram of FIG. 2 schematically shows an example of a system configuration of a vehicle driving assistance system 10. FIG. 3 shows a concept of driving assistance provided by the vehicle driving assistance system 10, and a flowchart of FIG. 4 shows an example of a procedure of driving assistance which is implemented as, for example, a vehicle driving assistance method and a vehicle driving assistance program. In addition, FIGS. 5 to 7 show examples of a recommended driving marking M superimposed on a real view S.

The vehicle driving assistance system 10 is a system that provides a driver with information for assisting in driving. In the present embodiment, the vehicle driving assistance system 10 displays a recommended driving marking M superimposed on a real view S. Note that the vehicle driving assistance method is a method for providing driving assistance by using, for example, hardware and software that form the vehicle driving assistance system 10 such as those which will be described later with reference to FIG. 2, etc. Note also that the vehicle driving assistance program is a program that is executed on, for example, a computer (e.g., an arithmetic processing unit 4 which will be described later with reference to FIG. 2) included in the vehicle driving assistance system 10, to implement a vehicle driving assistance function.

A real view S on which a recommended driving marking M is superimposed may be a view seen from the driver's seat 101 through a windshield 50 of the vehicle 100, or may be video that is shot by a front camera 1 (see FIGS. 2 and 3, etc.) which will be described later, and shown on a monitor 52. When the real view S is a view seen through the windshield 50, the recommended driving marking M is, for example, rendered on a head-up display 51 which is formed on the windshield 50, and superimposed on the real view S. A dashed-line region shown in the windshield 50 in FIG. 1 is a region in which the head-up display 51 is formed. In addition, when the real view S is video shown on the monitor 52, the recommended driving marking M is superimposed on the video.

As shown in FIG. 2, the vehicle driving assistance system 10 includes the front camera 1 (CAMERA), an arithmetic processing device 2 (CAL), a graphic control unit 3 (GCU), and a display device 5 (DISPLAY). In the present embodiment, the arithmetic processing device 2 and the graphic control unit 3 are formed as a single processor (a system LSI, a digital signal processor (DSP), etc.) or as a part of the arithmetic processing unit 4 which is formed as a single electronic control unit (ECU). As a matter of course, the arithmetic processing unit 4 may include other functional parts which are not shown. In addition, the display device 5 (display part) includes the above-described head-up display 51 and monitor 52.

In the present embodiment, the vehicle driving assistance system 10 further includes a sensor group 6 (SEN), a navigation database 7 (navi_db), and an eyepoint detection device 8 (EP_DTCT). The sensor group 6 can include sonar, radar, a vehicle speed sensor, a yaw-rate sensor, a global positioning system (GPS) receiver, etc. The navigation database 7 is a database that stores map information, road information, and ground object information (information on traffic signs, road markings, facilities, etc.). The eyepoint detection device 8 is configured to include, for example, a camera that shoots a driver's head, and detects a driver's eyepoint (eyes). It is preferable that a recommended driving marking M which is rendered on the head-up display 51 be rendered at a location appropriate to the driver's eyepoint.

As will be described later, the arithmetic processing device 2 identifies one or a plurality of obstacles B present around the vehicle 100, particularly, present close to a traveling direction, by image recognition that uses shot images obtained by the front camera 1. At this time, by further using information provided from the sensor group 6 such as sonar and radar, recognition accuracy may be able to be improved. In addition, the arithmetic processing device 2 creates a recommended driving marking M including a recommended route marking MK (see FIG. 5, etc.) representing a recommended route K (see FIG. 3) which is a traveling route with a relatively low likelihood of interference with obstacles B; and a recommended speed marking MV (see FIG. 5, etc.) representing a recommended speed index which is an index related to a travel speed recommended when the vehicle 100 travels the recommended route K. Upon the creation of a recommended driving marking M, by using information provided from the sensor group 6 such as a vehicle speed sensor, a yaw-rate sensor, and a GPS receiver, creation accuracy may be able to be improved. In addition, by obtaining map information, etc., from the navigation database 7, the accuracy of a location where the recommended driving marking M is superimposed by the graphic control unit 3 may be able to be improved.

When the vehicle driving assistance system 10 determines that as shown in FIG. 3, an obstacle B present in a traveling direction of the vehicle 100 and the vehicle 100 are likely to interfere with each other, the vehicle driving assistance system 10 calculates a traveling route with a relatively low likelihood of interference with the obstacle B, as a recommended route K. As shown in a flowchart of FIG. 4, the vehicle driving assistance system 10 first obtains shot images of views in a traveling direction of the vehicle 100 which are shot by the front camera 1 (#1: a shot image obtaining step and a shot image obtaining function). The vehicle driving assistance system 10 then recognizes images of obstacles B with which the vehicle 100 is likely to interfere, from among the shot images (#2: an obstacle recognition step and an obstacle recognition function). As described above, the obstacles B may be detected not only by image recognition, but also by using other methods that use results of detection by the sensor group 6. Therefore, the obstacle recognition step can also be referred to as obstacle detection step.

When obstacles B are detected, the vehicle driving assistance system 10 calculates a recommended route K which is a traveling route with a relatively low likelihood of interference with the obstacles B, and a recommended speed index at which the vehicle 100 travels the recommended route K (#4: a recommended route calculation step and a recommended route calculation function). Upon the calculation, it is also preferable that map information, etc., be obtained from the navigation database 7, and a recommended route K and a recommended speed index be calculated taking also into account a road width, whether there is an intersection, etc. FIG. 4 exemplifies a mode in which prior to the recommended route calculation step #4, a database reference step #3 (database reference function) at which information in the navigation database 7 is referred to is performed.

The vehicle driving assistance system 10 determines, based on the obstacles B recognized or detected, whether the obstacles B influence a traveling route of the vehicle 100. As one mode, in a range in which the vehicle 100 can travel in the traveling direction (e.g., on a road), costs related to the traveling are calculated. For example, the cost is high for a location where an obstacle B is present and an area around the obstacle B, and the cost is low for a location where there is no obstacle B, etc., and thus the vehicle 100 can travel smoothly. In addition, a destination on the traveling route is set in a range of a shot image, and the cost of the destination is set to the lowest value (e.g., zero).

The vehicle driving assistance system 10 can calculate a recommended route K by calculating the shortest course that passes through low-cost points from a current location to a destination. In this calculation method, a route in a direction with low costs is calculated, and thus, a calculation load becomes comparatively light. Note that there is also a case in which there are a large number of obstacles B and thus it is better for the vehicle 100 to stop. To handle such a case, it is preferable that an upper limit of costs at which a route can be shut down be also set.

Although description is simply made above, for a technique for thus performing autonomous operation while avoiding obstacles B in a three-dimensional space, there is known, for example, a potential method. The potential method is publicly known and thus a detailed description thereof is omitted, but, for example, by defining potential functions for a current value, a target location (destination), and an obstacle B and setting a gradient of the potential functions as a traveling direction, a recommended route K can be calculated. Note that the gradient can be found by a partial derivative for each coordinate component (e.g., for each of x-, y-, and z-axes in a three-dimensional Cartesian coordinate system.). A potential gradient to the destination value acts in an attractive direction, and a traveling direction of the recommended route K goes toward the destination value. On the other hand, a potential gradient of the obstacle B acts in a repulsive direction, and the recommended route K is set so as to avoid the obstacle B. The potential functions can be updated in real time based on observation information (shot images, results of detection by the sensor group 6, etc.), by which an appropriate recommended route K at each point in time can be calculated.

When the vehicle driving assistance system 10 has calculated a recommended route K and a recommended speed index, the vehicle driving assistance system 10 creates a recommended driving marking M including a recommended route marking MK and a recommended speed marking MV, and outputs the recommended driving marking M to the display device 5 (#5: a marking creation step (marking creation function) and #6: a marking output step (marking output function)). As will be described later with reference to FIG. 5, etc., the recommended route marking MK and the recommended speed marking MV are associated with each other. The recommended route K and the recommended speed index may be separately calculated, but it is preferable to create, at the marking creation step #5, a recommended driving marking M such that the recommended route K is associated with the recommended speed index. It can be said that the marking creation step #5 (marking creation function) is a step (function) of associating the recommended route marking MK with the recommended speed marking MV.

In addition, at the marking output step #6, by using also, for example, a result of detection by the eyepoint detection device 8, the recommended driving marking M is outputted such that the recommended driving marking M is displayed appropriate to the locations of obstacles B in a real view S. Note that when a recommended driving marking M is created, too, it may be desirable to take into account a driver's eyepoint, and thus, it does not hinder the creation of a recommended driving marking M appropriate to the locations of obstacles B in a real view S at the marking creation step #5. It can be said that the marking output step #6 (marking output function) is a step (function) of displaying the recommended driving marking M, appropriate to the locations of obstacles B in a real view S.

It can be said that the vehicle driving assistance method is a method for implementing driving assistance by performing each step such as those described above, using hardware and software that form the vehicle driving assistance system 10. In addition, a computer (e.g., the arithmetic processing unit 4 which will be described later with reference to FIG. 2) included in the vehicle driving assistance system 10 executes a program that implements each function such as those described above.

FIGS. 5 to 7 show examples of a recommended driving marking M superimposed on a real view S. The recommended driving marking M is displayed appropriate to the locations of obstacles B in the real view S, and can appropriately provide guidance on how the driver should drive the vehicle 100 in relation to the obstacles B. That is, since the recommended driving marking M is displayed appropriate to the locations of obstacles B in the real view S, the driver can also easily understand the reason why a travel route, a travel speed, etc., are thus recommended. In a mode shown in FIGS. 5 to 7, a recommended route marking MK and a recommended speed marking MV are displayed so as to be associated with each other. Specifically, the recommended speed marking MV is displayed in a display region of the recommended route marking MK

FIG. 5 exemplifies a real view S and a recommended driving marking M for a case in which the vehicle 100 is present approximately at a location indicated by solid lines in FIG. 3. At this time, the vehicle driving assistance system 10 has detected the presence of obstacles B in portions enclosed by dashed lines in FIG. 5. A first obstacle B1 is a person riding on a bicycle, and a second obstacle B2, a third obstacle B3, and a fourth obstacle B4 are persons walking. Here, each obstacle B is a moving dynamic obstacle. The vehicle driving assistance system 10 detects the presence of obstacles B based on shot images of the front camera 1. Furthermore, when an obstacle B is a dynamic obstacle, a moving path of the dynamic obstacle is detected using, for example, a publicly known image recognition process such as an optical flow method, based on shot images of the front camera 1, by which a future moving direction is predicted (estimated). Here, the thus estimated moving direction is referred to as estimated moving direction. For example, an arrow indicated by a dash-dotted line extending from the obstacle B in FIG. 3 indicates an estimated moving direction of the obstacle B.

The vehicle driving assistance system 10 calculates influence exerted on the traveling of the vehicle 100 by an obstacle B (including a dynamic obstacle), based on a location where the obstacle B is present and an estimated moving direction of the obstacle B. For example, FIG. 3 exemplifies influence E calculated for the obstacle B. Here, the influence E is set in a stepwise manner, and first influence E1 in a region close to the obstacle B is greater influence E than second influence E2 in a region relatively far from the obstacle B. As one mode, as shown in FIG. 3, the vehicle driving assistance system 10 sets a recommended route K so as to avoid a region as much as possible in which the obstacle B is estimated to influence the traveling of the vehicle 100 (e.g., a region in which the first influence E1 and the second influence E2 are estimated). That is, a traveling route with a relatively low likelihood of interference between the obstacle B present in a traveling direction of the vehicle 100 and the vehicle 100 is set as a recommended route K.

FIG. 5 exemplifies a mode in which the recommended route K thus set is superimposed on the real view S, as a recommended route marking MK The recommended route marking MK is displayed appropriate to the locations of the obstacles B in the real view S. As shown in FIG. 5, the recommended route K that the vehicle 100 can travel with appropriate spacing between the first obstacle B1 and the second obstacle B2 and the vehicle 100 is shown to the driver as the recommended route marking MK. The recommended route marking MK is displayed so as to be associated with a recommended speed marking MV. In the present embodiment, the recommended speed marking MV is displayed in a display region of the recommended route marking MK, and is displayed as a recommended driving marking M in which the recommended speed marking MV is integrated with the recommended route marking MK

In the mode shown in FIG. 5, the recommended driving marking M (recommended route marking MK) is formed by arranging a plurality of unit markings UM along the recommended route K. Here, the recommended speed marking MV is represented by making the colors of the unit markings UM arranged side by side along the recommended route K different from each other. In the traveling direction of the vehicle 100, the vehicle 100 is likely to approach the first obstacle B1 and the second obstacle B2, and thus, it is desirable that the vehicle 100, for example, slow down. Hence, the recommended speed of the vehicle 100 decreases in the traveling direction. FIG. 5 exemplifies a mode in which unit markings UM arranged on a driver side (a vehicle 100 side) are displayed using first unit markings M1 (e.g., white or blue), and unit markings UM arranged on a traveling direction side are displayed using second unit markings M2 (e.g., yellow).

It is preferable that the colors of the first unit marking M1 and the second unit marking M2 be colors that call more attention for a lower recommended speed, based on cognitive engineering, etc. Compared to the white or blue used for the first unit markings M1, the yellow used for the second unit markings M2 generally reminds a person of the necessity for more attention. In addition, the recommended speed marking MV is displayed so as to be associated with the recommended route marking MK by displaying a recommended speed index for each point on the recommended route K. For example, the travel speed recommended for the vehicle 100 varies from point to point on the recommended route K. By displaying a recommended speed index for each point on the recommended route K such that the recommended speed index is associated with the recommended route marking MK, the driver can be informed in an easy-to-understand manner about information on what travel speed is appropriate for traveling the recommended route K.

FIG. 6 exemplifies a recommended driving marking M for a case in which the vehicle 100 has further traveled ahead compared to in FIG. 5. Compared to FIG. 5, in addition to the first obstacle B1 and the second obstacle B2, the third obstacle B3 and the fourth obstacle B4 are also closer in distance to the vehicle 100. Hence, the colors of the unit markings UM all become the color for the second unit markings M2, recommending slowing down of the vehicle 100.

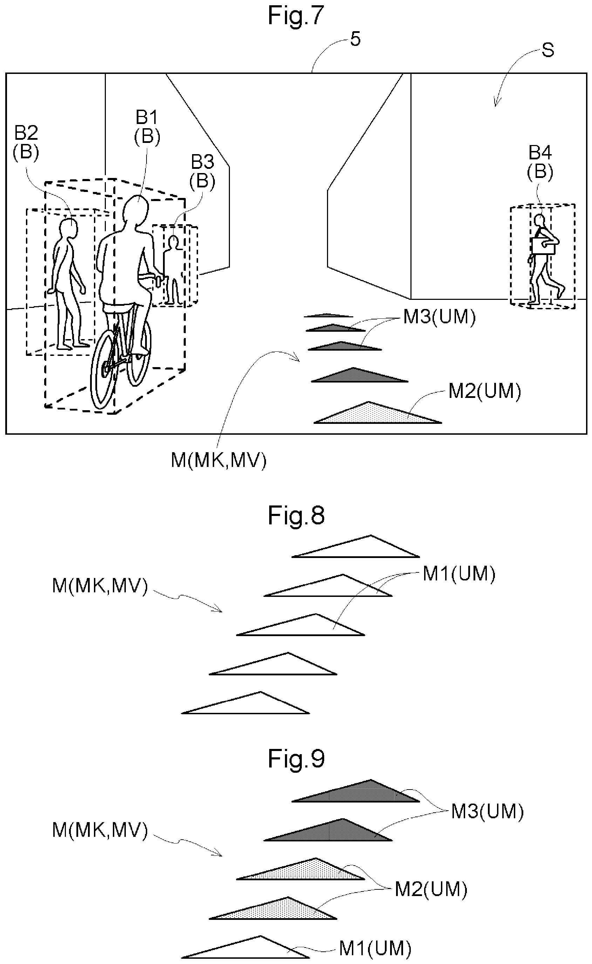

FIG. 7 exemplifies a recommended driving marking M for a case in which the vehicle 100 has further traveled ahead compared to in FIG. 6. In FIG. 7, compared to FIG. 6, particularly, the first obstacle B1 and the fourth obstacle B4 approach the route that the vehicle 100 travels. Hence, as unit markings UM, third unit markings M3 (e.g., red) that call more attention than the second unit markings M2 are also used. The third unit markings M3 are applied in a case of a recommended speed at which going at the slowest possible speed or a stop is recommended.

In the above description, a mode in which the recommended speed marking MV is displayed in different colors depending on a travel speed (one of recommended speed indices which will be described later) recommended for the vehicle 100 is exemplified and described with reference to FIGS. 5 to 7. That is, when the vehicle 100 can travel at a travel speed with no particular constraints, as shown in FIG. 8, the entire recommended route K is formed of first unit markings M1 (white or blue). On the other hand, when the travel speed decreases as traveling the recommended route K, as shown in FIG. 9, unit markings UM are arranged such that a first unit marking M1 and then second unit markings M2 (yellow) are arranged, followed by third unit markings M3 (red).

Note that although FIGS. 5 to 9 exemplify a mode in which color gradation is represented by arranging unit markings UM with different colors along a recommended route K, a mode is not limited thereto. A mode may be adopted in which a recommended route marking MK is formed in a continuous linear form, and the color changes in the single continuous marking.

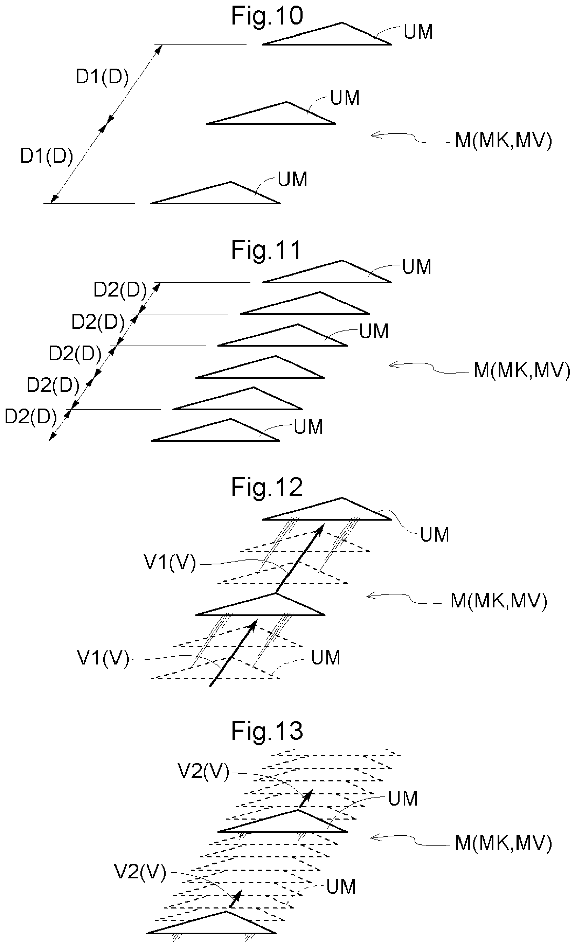

Note that in a mode in which a plurality of unit markings UM are arranged, the recommended speed marking MV not only adopts a mode in which the color of the recommended driving marking M thus varies, but may also be such that a mode in which the unit markings UM are arranged varies. In addition, in both of a mode in which the recommended route marking MK has a plurality of unit markings UM and a mode in which the recommended route marking MK is formed in a continuous linear form, the recommended speed marking MV can adopt a mode in which the recommended speed marking MV is displayed in a manner in which at least one of the color, shape, and movement of the recommended driving marking M varies depending on a recommended speed index such as a travel speed. Such a mode will be described below with reference to FIGS. 10 to 15.

FIGS. 10 and 11 exemplify a mode in which a recommended speed marking MV is represented by making an arrangement mode of a plurality of unit markings UM vary. That is, a mode is exemplified in which a recommended speed marking MV is displayed by making intervals D with which a plurality of unit markings UM are arranged vary depending on a recommended speed index such as a travel speed. FIG. 10 shows a case in which the vehicle 100 can travel at a travel speed with no particular constraints, and unit markings UM are arranged with first intervals D1 along a recommended route K. FIG. 11 exemplifies a recommended speed marking MV for a case in which the vehicle 100 is allowed to travel at a lower travel speed than that in FIG. 10, and unit markings UM are arranged with second intervals D2 shorter than the first intervals D1 along the recommended route K. Considering the spacing D between unit markings UM as a distance at which the vehicle 100 travels in a unit of time, in a case of the second intervals D2 which are shorter intervals D, the travel speed of the vehicle 100 is low, enabling to prompt the driver to drive slowly.

FIGS. 12 and 13 exemplify a mode in which a recommended speed marking MV is displayed in a manner in which the movement of the recommended speed marking MV varies depending on a recommended speed index such as the travel speed of the vehicle 100. Specifically, the recommended speed marking MV is represented by making a moving speed V at which unit markings UM move in a traveling direction along a recommended route K vary depending on a recommended speed index such as a travel speed. FIG. 12 shows a case in which the vehicle 100 can travel at a travel speed with no particular constraints, and unit markings UM move in a traveling direction of the vehicle 100 at a first speed V1 along a recommended route K. FIG. 13 exemplifies a recommended speed marking MV for a case in which the vehicle 100 is allowed to travel at a lower travel speed than that in FIG. 12, and unit markings UM move in the traveling direction of the vehicle 100 at a second speed V2 lower than the first speed V1 along the recommended route K. Considering the moving speed of the unit markings UM as the travel speed of the vehicle 100, in a case of the second speed V2 which is a lower moving speed V, the travel speed of the vehicle 100 is low, enabling to prompt the driver to drive slowly.

Note that although FIGS. 12 and 13 exemplify a mode in which the movement (moving speed V) of the recommended speed marking MV is represented by allowing each of a plurality of unit markings UM to move, a mode is not limited thereto. A single recommended route marking MK may move along a recommended route K, or a mode in which a continuous linear recommended route marking MK sweeps (a mode in which the recommended route marking MK disappears in turn from the driver side and when it reaches an end of the recommended route K, rendering is performed again, which is repeated) may be adopted.

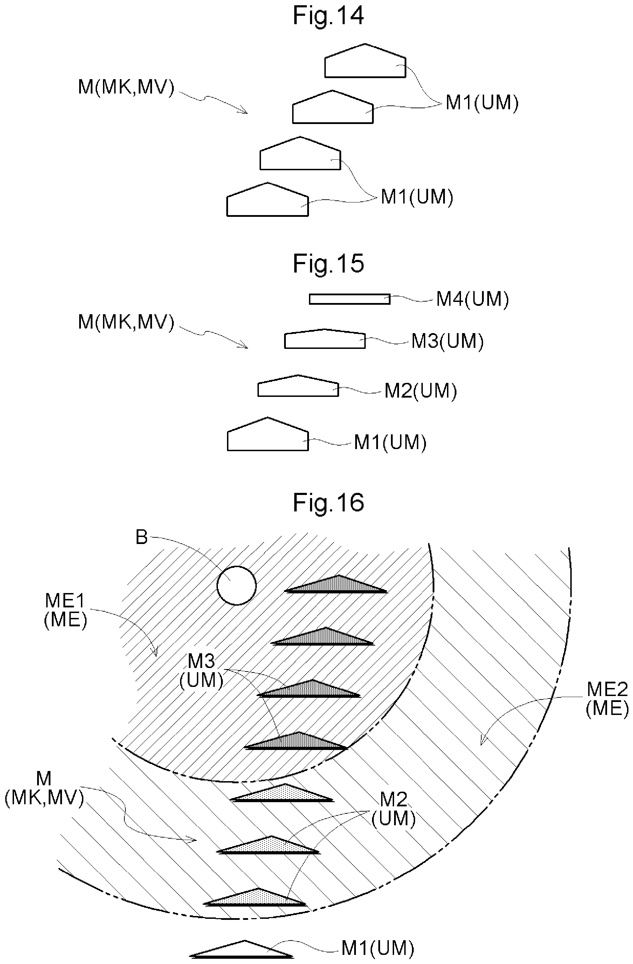

FIGS. 14 and 15 exemplify a mode in which a recommended speed marking MV is displayed in a manner in which the shape of the recommended speed marking MV varies depending on a recommended speed index such as the travel speed of the vehicle 100. FIGS. 14 and 15 exemplify a mode in which the shapes of unit markings UM vary depending on a recommended speed index. FIG. 14 shows a case in which the vehicle 100 can travel at a travel speed with no particular constraints. Unit markings UM are formed by arranging first unit markings M1 having the same shape along a recommended route K, and by the side-by-side arrangement of the first unit markings M1 having the same shape, a recommended speed marking MV is displayed.

FIG. 15 exemplifies a recommended speed marking MV for a case in which the vehicle 100 is allowed to travel at a lower travel speed than that in FIG. 14. Unit markings UM include a second unit marking M2 having a shape indicating that the travel speed is lower than that of the first unit marking M1; a third unit marking M3 representing a travel speed lower than that of the second unit marking M2; and a fourth unit marking M4 representing a travel speed lower than that of the third unit marking M3. Each unit marking UM is formed such that the angle (interior angle) of a top edge portion going in a traveling direction increases as the travel speed decreases. That is, a top edge portion of the second unit marking M2 has a larger angle than a top edge portion of the first unit marking M1, and a top edge portion of the third unit marking M3 has a larger angle than the top edge portion of the second unit marking M2. In addition, a top edge portion of the fourth unit marking M4 has a larger angle than the top edge portion of the third unit marking M3, and the fourth unit marking M4 has a linear top edge portion. Namely, in this example, the maximum value of the angle (interior angle) of the top edge portion of the unit marking UM is 180 degrees. The first unit marking M1, the second unit marking M2, and the third unit marking M3 are formed in a pentagon shape so as to remind the driver of an arrow indicating a traveling direction, whereas the fourth unit marking M4 is formed in a rectangular shape with no arrow portion. The fourth unit marking M4 can serve as a recommended speed marking MV that recommends stopping of the vehicle 100.

Note that although FIGS. 14 and 15 exemplify a mode in which a travel speed index is represented by making the shapes of a plurality of unit markings UM different from each other, a mode is not limited thereto. A single recommended route marking MK may be formed in a continuous linear form, and the shape of the single recommended route marking MK may be changed. For example, by forming a top edge portion of a single continuous linear recommended route marking MK in an arrow-like pointed shape and making the shape of the top edge portion vary, a travel speed, etc., may be represented. In this case, it is preferable that when the recommended travel speed is high, the top edge portion be pointed, and the angle of the top edge portion increase (sharpness decrease and the top edge portion become flattened) as the recommended travel speed decreases.

Note that the above description exemplifies a mode in which a travel speed index represented by a recommended speed marking MV is a travel speed (absolute speed) recommended for the vehicle 100. That is, a mode is exemplified in which a recommended speed marking MV is displayed in a display mode in which the recommended speed marking MV corresponds to the absolute speed of the vehicle 100. However, the travel speed index is not limited to the absolute speed as long as the travel speed index is an index related to a travel speed recommended when the vehicle 100 travels a recommended route K. For example, the travel speed index may be the acceleration of the vehicle 100 including acceleration during deceleration recommended for the vehicle 100 and acceleration during increasing speed allowed for the vehicle 100. Therefore, a recommended speed marking MV may be displayed in a display mode in which the recommended speed marking MV corresponds to the acceleration of the vehicle 100 including acceleration during deceleration recommended for the vehicle 100 and acceleration during increasing speed allowed for the vehicle 100.

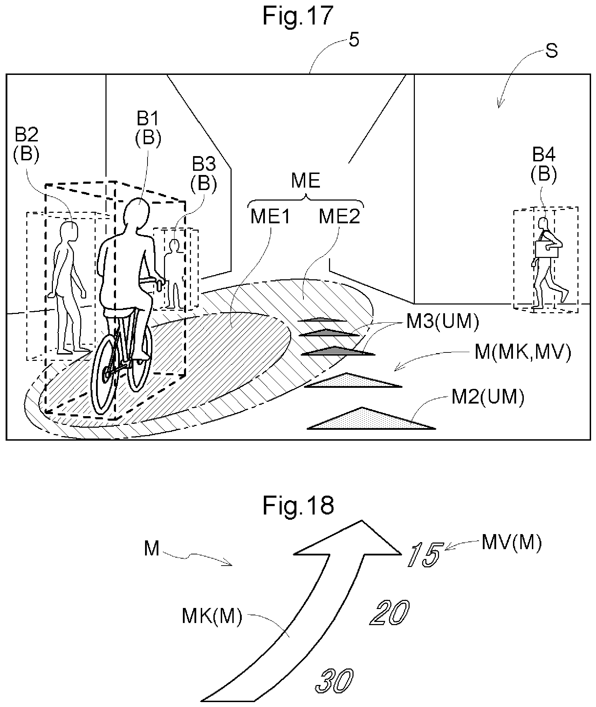

As described above with reference to FIG. 3, the vehicle driving assistance system 10 calculates influence exerted on the traveling of the vehicle 100 by the obstacle B (including a dynamic obstacle), based on a location where the obstacle B is present and an estimated moving direction of the obstacle B. FIG. 3 exemplifies the influence E calculated for the obstacle B, and it is preferable that the influence E also be superimposed, as a marking, on the real view S. The present embodiment exemplifies a mode in which an attention call marking ME (influence marking) for calling attention by informing the driver about the presence of an obstacle B is superimposed on a real view S, based on influence E (see FIG. 17).

Note that it is preferable that when the influence E is set in a stepwise manner like the first influence E1 and the second influence E2 shown in FIG. 3, the attention call marking ME (influence marking) also be displayed in a mode in which the attention call marking ME (influence marking) represents the levels of the influence E. In addition, as described with reference to FIGS. 5 to 15, it is preferable that when a recommended speed marking MV is displayed in a display region of a recommended route marking MK and represents a plurality of levels of a recommended speed index, in a region in which the recommended route marking MK and an attention call marking ME (influence marking) overlap each other, the recommended speed marking MV be displayed by varying the level of the recommended speed marking MV according to the level of the influence E.

FIG. 16 shows a relationship between an attention call marking ME and a recommended driving marking M as a plan view such as that of FIG. 3. As described above with reference to FIG. 3, around the obstacle B there is set influence E in a stepwise manner, based on a location where the obstacle B is present and an estimated moving direction of the obstacle B. When the first influence E1 and the second influence E2 are set as two-level influence E as described above, an attention call marking ME is created based on the setting ranges of the first influence E1 and the second influence E2. A first attention call marking ME1 is created based on the first influence E1, and a second attention call marking ME2 is created based on the second influence E2.

When a recommended speed marking MV is represented by making a display mode of a recommended route marking MK vary in a stepwise manner and the recommended route marking MK overlaps an attention call marking ME, it is preferable to associate changes in the level of the attention call marking ME with changes in the display mode of the recommended route marking MK because it provides excellent driver's visibility. For example, as shown in FIG. 16, in a region in which the attention call marking ME does not overlap the recommended route marking MK, the recommended driving marking M is formed using a first unit marking M1 that can allow the vehicle 100 to travel at a travel speed with no particular constraints. In a region in which the second attention call marking ME2 representing the second influence E2 that exerts an influence on the traveling of the vehicle 100 overlaps the recommended route marking MK, the recommended driving marking M is formed using second unit markings M2. In a region in which the first attention call marking ME1 representing the first influence E1 that exerts greater influence on the traveling of the vehicle 100 than the second influence E2 overlaps the recommended route marking MK, the recommended driving marking M is formed using third unit markings M3.

Note that a correspondence relationship between the levels of the attention call marking ME and the recommended speed marking MV is not limited to a mode shown in FIG. 16. For example, it does not hinder the formation of the recommended driving marking M using a second unit marking M2 instead of a first unit marking M1 due to other factors, etc., even in a region in which the attention call marking ME does not overlap the recommended route marking MK

FIG. 17 shows an example in which a recommended driving marking M and an attention call marking ME are superimposed on the same real view S as that of FIG. 7. In FIG. 17, in a region in which the attention call marking ME does not overlap a recommended route marking MK, the recommended driving marking M is formed already using second unit markings M2. Hence, in a region in which a second attention call marking ME2 representing the second influence E2 overlaps the recommended route marking MK, the recommended driving marking M is formed using third unit markings M3 representing a lower speed than that of the second unit markings M2. Although FIG. 17 does not exemplify a region in which a first attention call marking ME1 overlaps the recommended route marking MK, it is preferable, for example, to show in the region a recommended speed marking MV that recommends stopping of the vehicle 100, such as the fourth unit marking M4 described with reference to FIG. 15.

Note that although in the above description a mode in which a recommended speed marking MV is displayed in a display region of a recommended route marking MK is exemplified and described, it does not hinder a mode in which the recommended speed marking MV is displayed in a region other than the display region of the recommended route marking MK, as long as the recommended route marking MK and the recommended speed marking MV are displayed so as to be associated with each other. For example, a mode may be adopted in which, as exemplified in FIG. 18, a recommended speed marking MV representing recommended speeds in numerical values is placed next to a continuous arrow-shaped recommended route marking MK As a matter of course, the recommended speed marking MV placed next to the recommended route marking MK is not limited to numerical values such as those in FIG. 18, and may be any as long as a recommended speed index can be represented by color, shape, or movement. For example, the recommended speed index may be represented by color gradation of side lines going along the recommended route marking MK, movement of the side lines, etc.

### [Overview of the embodiment]

An overview of a vehicle driving assistance system (10), a vehicle driving assistance method, and a vehicle driving assistance program described above will be briefly described below.

The vehicle driving assistance system (10) includes:
a display part that displays a recommended driving marking superimposed on a real view (S),
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the recommended route marking and the recommended speed marking are displayed so as to be associated with each other.

By displaying the recommended driving marking (M) in which the recommended route marking (MK) is associated with the recommended speed marking (MV), the driver can be appropriately informed in an easy-to-understand manner about information on what travel speed is appropriate for traveling the recommended route (K). As such, according to this configuration, the driver can be appropriately informed about information on a route, a speed, etc., recommended for traveling while avoiding obstacles (B) present around the vehicle (100).

Here, it is preferable that the recommended speed marking (MV) be displayed so as to be associated with the recommended route marking (MK), by being displayed in a display region of the recommended route marking (MK).

By thus displaying the recommended speed marking (MV), recommended driving information can be concisely shown to the driver as a unified recommended driving marking (M), and thus, driver's visibility increases and the driver can easily recognize the driving information.

In addition, it is preferable that the recommended speed marking (MV) be displayed so as to be associated with the recommended route marking (MK), by displaying the recommended speed index for each point on the recommended route (K).

For example, the travel speed recommended for the vehicle (100) varies from point to point on the recommended route (K). By displaying a recommended speed index for each point on the recommended route (K) such that the recommended speed index is associated with the recommended route marking (MK), the driver can be informed in an easy-to-understand manner about information on what travel speed is appropriate for traveling the recommended route (K).

Here, it is preferable that the recommended speed marking (MV) be displayed in a display mode in which the recommended speed marking (MV) corresponds to an absolute speed of the vehicle (100).

By thus displaying the recommended speed marking (MV) in a marking mode in which the recommended speed marking (MV) corresponds to the absolute speed of the vehicle (100), i.e., a travel speed recommended for the vehicle (100), the driver can be informed about a recommended travel speed in an easy-to-recognize manner.

In addition, it is also preferable that the recommended speed marking (MV) be displayed in a display mode in which the recommended speed marking (MV) corresponds to acceleration of the vehicle (100) including acceleration during deceleration recommended for the vehicle (100) and acceleration during increasing speed allowed for the vehicle.

The travel speed of the vehicle (100) changes depending on the acceleration of the vehicle (100) determined based on a driver's operation. By thus displaying the recommended speed marking (MV) in a marking mode in which the recommended speed marking (MV) corresponds to the acceleration of the vehicle (100), the driver can be informed about a recommended travel speed in a manner in which the driver can easily perform a driving operation appropriate to recommended acceleration.

In addition, it is preferable that the recommended speed marking (MV) be displayed in a manner in which at least one of color, shape, and movement of the recommended speed marking (MV) varies depending on the recommended speed index.

While the recommended route marking (MK) is a marking representing a route which is a location in the real view (S), the recommended speed marking (MV) is a marking representing an index related to the travel speed of the vehicle (100), i.e., a level, and thus, it is desirable that the recommended speed marking (MV) be associated with the recommended route marking (MK) and be display capable of representing a level. Hence, by associating the recommended speed marking (MV) with the recommended route marking (MK) and making at least one of color, shape, and movement vary depending on the recommended speed, the driver can visually recognize the level of recommended speed. It is preferable to thus represent the recommended speed marking (MV) because the driver can be appropriately informed about information included in the recommended speed index.

In addition, it is preferable that the recommended route marking (MK) be an arrangement of a plurality of unit markings (UM) along the recommended route (K), and the recommended speed marking (MV) be displayed such that intervals (D) with which the plurality of unit markings (UM) are arranged vary depending on the recommended speed index.

By an arrangement of a plurality of unit markings (UM), a linear recommended route (K) can be appropriately represented. By making intervals (D) with which the unit markings (UM) are arranged vary, representation indicating levels can be added. The recommended speed marking (MV) is a marking representing an index related to the travel speed of the vehicle (100), i.e., a level, and the driver can be appropriately informed about information included in the recommended speed index by intervals (D) with which the unit markings (UM) are arranged.

In addition, it is preferable that the display part (5) further display influence markings (ME) superimposed on the real view (S), the influence markings (ME) each representing influence (E) exerted on traveling of the vehicle (100) by each of the obstacles (B), in a stepwise manner, the recommended speed marking (MV) be displayed in a display region of the recommended route marking (MK) and represent a plurality of levels of the recommended speed index, and in a region in which the recommended route marking (MK) overlaps any of the influence markings (ME), the recommended speed marking (MV) be displayed by varying a level of the recommended speed index according to a level of the influence (E).

By displaying the influence markings (ME), the driver can be informed about the presence of the obstacles (B), based on which the recommended route marking (MK) and the recommended speed marking (MV) are created. By this, the driver can perform a driving operation in which the driver is also aware of the obstacles (B) without depending on only the recommended route marking (MK) and the recommended speed marking (MV).

Various technical features of the above-described vehicle driving assistance system (10) are also applicable to a vehicle driving assistance method and a vehicle driving assistance program. For example, the vehicle driving assistance method can have steps having features of the above-described vehicle driving assistance system (10). In addition, the vehicle driving assistance program can cause a computer to implement functions having the features of the above-described vehicle driving assistance system (10). As a matter of course, these vehicle driving assistance method and vehicle driving assistance program can also provide the functions and effects of the above-described vehicle driving assistance system (10). Furthermore, various additional features exemplified as preferred modes of the vehicle driving assistance system (10) can also be incorporated into these vehicle driving assistance method and vehicle driving assistance program, and the method and the program can also provide functions and effects corresponding to their additional features.

The vehicle driving assistance method in that case is
a vehicle driving assistance method for displaying, on a display part (5), a recommended driving marking (M) superimposed on a real view (S),
the recommended driving marking (M) includes: a recommended route marking (MK) representing a recommended route (K), the recommended route (K) being a traveling route with a relatively low likelihood of interference with one or a plurality of obstacles (B) present in a traveling direction of a vehicle (100); and a recommended speed marking (MV) representing a recommended speed index, the recommended speed index being an index related to a travel speed recommended when the vehicle (100) travels the recommended route (K), and
the vehicle driving assistance method includes a step of displaying the recommended route marking (MK) and the recommended speed marking (MV) such that the recommended route marking (MK) and the recommended speed marking (MV) are associated with each other.

In addition, the vehicle driving assistance program is
a vehicle driving assistance program for displaying, on a display part (5), a recommended driving marking (M) superimposed on a real view (S),
the recommended driving marking (M) includes: a recommended route marking (MK) representing a recommended route (K), the recommended route (K) being a traveling route with a relatively low likelihood of interference with one or a plurality of obstacles (B) present in a traveling direction of a vehicle (100); and a recommended speed marking (MV) representing a recommended speed index, the recommended speed index being an index related to a travel speed recommended when the vehicle (100) travels the recommended route (K), and
the vehicle driving assistance program causes a computer (4) to implement a function of displaying the recommended route marking (MK) and the recommended speed marking (MV) such that the recommended route marking (MK) and the recommended speed marking (MV) are associated with each other.

### REFERENCE SIGNS LIST

4: Arithmetic processing unit (computer), 5: Display device (display part), 10: Vehicle driving assistance system, 51: Head-up display (display part), 52: Monitor (display part), 100: Vehicle, B: Obstacle, D: Spacing, E: Influence, K: Recommended route, M: Recommended driving marking, ME: Attention call marking (influence marking), ME1: First attention call marking (first influence marking), ME2: Second attention call marking (second influence marking), MK: Recommended route marking, MV: Recommended speed marking, S: Real view, and UM: Unit marking

## Claims

1. A vehicle driving assistance system comprising:
a display part that displays a recommended driving marking superimposed on a real view,
wherein
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the recommended route marking and the recommended speed marking are displayed so as to be associated with each other.

2. The vehicle driving assistance system according to claim 1, wherein the recommended speed marking is displayed so as to be associated with the recommended route marking, by being displayed in a display region of the recommended route marking.

3. The vehicle driving assistance system according to claim 1 or 2, wherein the recommended speed marking is displayed so as to be associated with the recommended route marking, by displaying the recommended speed index for each point on the recommended route.

4. The vehicle driving assistance system according to any one of claims 1 to 3, wherein the recommended speed marking is displayed in a display mode in which the recommended speed marking corresponds to an absolute speed of the vehicle.

5. The vehicle driving assistance system according to any one of claims 1 to 3, wherein the recommended speed marking is displayed in a display mode in which the recommended speed marking corresponds to acceleration of the vehicle including acceleration during deceleration recommended for the vehicle and acceleration during increasing speed allowed for the vehicle.

6. The vehicle driving assistance system according to any one of claims 1 to 5, wherein the recommended speed marking is displayed in a manner in which at least one of color, shape, and movement of the recommended speed marking varies depending on the recommended speed index.

7. The vehicle driving assistance system according to any one of claims 1 to 6, wherein
the recommended route marking is an arrangement of a plurality of unit markings along the recommended route, and
the recommended speed marking is displayed such that intervals with which the plurality of unit markings are arranged vary depending on the recommended speed index.

8. The vehicle driving assistance system according to any one of claims 1 to 7, wherein
the display part further displays influence markings superimposed on the real view, the influence markings each representing influence exerted on traveling of the vehicle by each of the obstacles, in a stepwise manner,
the recommended speed marking is displayed in a display region of the recommended route marking and represents a plurality of levels of the recommended speed index, and
in a region in which the recommended route marking overlaps any of the influence markings, the recommended speed marking is displayed by varying a level of the recommended speed index according to a level of the influence.

9. A vehicle driving assistance method for displaying, on a display part, a recommended driving marking superimposed on a real view,
wherein
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the vehicle driving assistance method comprises a step of displaying the recommended route marking and the recommended speed marking such that the recommended route marking and the recommended speed marking are associated with each other.

10. A vehicle driving assistance program for displaying, on a display part, a recommended driving marking superimposed on a real view,
wherein
the recommended driving marking includes: a recommended route marking representing a recommended route, the recommended route being a traveling route with a relatively low likelihood of interference with one or a plurality of obstacles present in a traveling direction of a vehicle; and a recommended speed marking representing a recommended speed index, the recommended speed index being an index related to a travel speed recommended when the vehicle travels the recommended route, and
the vehicle driving assistance program causes a computer to implement a function of displaying the recommended route marking and the recommended speed marking such that the recommended route marking and the recommended speed marking are associated with each other.
